Europäisches Patentamt

European Patent Office

Office européen des brevets

Veröffentlichungsnummer: **0 285 063**
**A2**

## EUROPÄISCHE PATENTANMELDUNG

Anmeldenummer: 88104973.8

Int. Cl.⁴: **B62D 7/06**

Anmeldetag: 28.03.88

Priorität: 01.04.87 IT 6600487

Veröffentlichungstag der Anmeldung:
05.10.88 Patentblatt 88/40

Benannte Vertragsstaaten:
AT BE CH DE ES FR GB GR IT LI LU NL SE

Anmelder: CO.B.R.A. S.N.C. DI BRUSEGHINI
ERIO & C.
Via Stazione, 12
I-23026 Ponte in Valtellina (Sondrio)(IT)

Erfinder: Bruseghini, Giorgio
Via Mazzini, 6
I-23100 Sondrio(IT)

Vertreter: Jaumann, Paolo
Studio Brevetti Jaumann S.n.c. Piazza
Castello, 2
I-20121-Milano(IT)

Lenksystem für Differentialbrücken für Kraftfahrzeuge aller Art mit 4-Rad-Antrieb.

Die Erfindung betrifft ein Lenksystem für Differentialbrücken für Kraftfahrzeuge aller Art mit 4-Rad-Antrieb, bestehend aus einem feststehenden an der Differentialbrücke (5) angeflanschten Innenteil (4) und einem beweglichen Aussenteil (28), wobei die beiden Teile einerseits über einen auf Kegelrollenlagern (17a, 17b) gelagerten Drehzapfen (15) und andererseits über einen Galenkkopf (2) mineinander verbunden sind.

EP 0 285 063 A2

## "Lenksystem für Differentialbrücken für Kraftfahrzeuge aller Art mit 4-Rad-Antrieb"

Die Erfindung betrifft ein Lenksystem für Differentialbrücken für Kraftfahrzeuge aller Art, wie PKW, LKW, Traktoren, Landwirtschaftsfahrzeuge, mit 4-Rad-Antrieb, für Lasten von 500-5000 kg und Drehmoment von 36-330 N/m.

Die Lenkvorrichtung gemäss der Erfindung ist durch entspechende Auslegung für jegliche Art von Differentialbrücken für Kraftfahrzeuge mit 4-Rad-Antrieb, sowie für jegliche Art von Bremsen (Zangenbremse, Scheibenbremse, Trommelbremse) geeignet.

Je nach der verwendeten homokinetischen Kupplung kann der Lenkwinkel von 42-44° variieren und dank der perfekten Zentrierung mittels eines Führungslagers im feststehenden Innenteil der Vorrichtung werden die karakteristischen Verhemmungen beim grössten Lenkausschlag vermieden, wie sie bei den bekannten Systemen vorkommen.

Die Vorrichtung kann mittels der geeigneten Anzahl von Bolzen (je nach Last) auf jeglicher Art von Achsen mit Flanschen befestigt werden, sodass die Montage und Reparaturarbeiten aud der Werkbank ausgeführt werden können, mit grosser Zeitersparnis.

Ja nach Art des Fahrzeuges kann die Vorrichtung für verschiedene Rotationswinkel (0-20°) inbezug auf die Rotationsachse ausgeführt werden, damit diese Achse mit der Senkrechten des Rades übereinstimmt, wodurch die Lenkung sehr erleichtert wird. Die Rotation ist durch zwei Kegelrollenlager ermöglicht und erleichtert, die am oberen Arm der Lenkvorrichtung montiert sind.

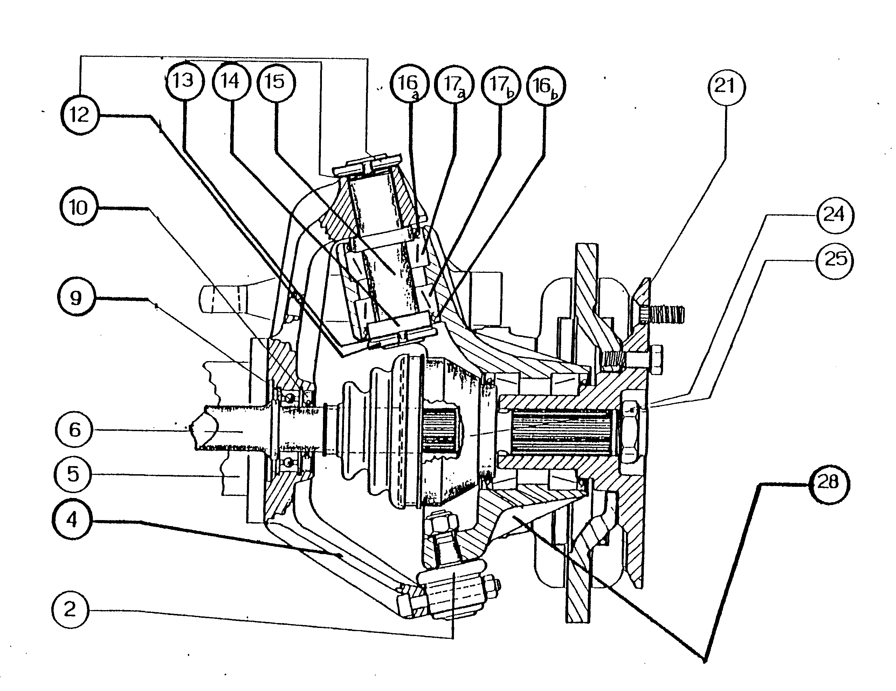

Ein Ausführungsbeispiel des Erfindungsgegenstandes ist nachstehend mit Bezug auf die Zeichnung, in der die Lenkvorrichtung im Schnitt gezeigt ist, näher beschrieben.

Die Lenkvorrichtung besteht aus zwei Hauptteilen und zwar das innere feststehende Teil 4 und das äussere bewegliche Teil 28. Das Innenteil 4 hat die Funktion des Trägers für das bewegliche Aussenteil 28 und wird an der Differentialbrücke 5 mittels Schraubenbolzen angeflanscht, deren Anzahl und Dimension je nach den zu tragenden Lasten veränderlich ist.

Die beiden Teile 28 und 4 sind durch den Verbindungszapfen 15, der in den Kugelrollenlagern 17a,17b gelagert ist, sowie durch durch den Gelenkkopf 2 miteinander verbunden.

Die Rotation des Aussenteils 28 erfolgt in den Kegelrollenlagern 17a,17b, die durch Haltescheiben 14 und Zwischenscheiben 13 und durch Einstellringe 12 mit Präzision eingestellt werden können.

Die permanente Schmierung der Rollenlager ist durch Olschutzscheiben 16a,16b gesichert, sodass eine lange Dauer des Rotationssystems gewährleistet ist.

Das Lenksystem gemäss der Erfindung ermöglicht eine rasche Montage und Demontage der Komponenten. Die Einstellung des Rotationssystems kenn ohne die Anwesenheit der homokinetischen Kupplung 25, die mit der Radtragnabe 21 der inneren Halbachse gekuppelt ist, erfolgen. Das Aussenteil 28 kann bis zo 100° gegenüber dem Innenteil 4 gedreht werden, wodurch der Ein-und Ausbau der homokinetischen Kupplung ermöglicht wird. Dies ist bei den bekannten Systemen wegen des Durchmessers der inneren Halbkugel nicht möglich. Gleichzeitig ist dadurch beim erfindungsgemässen Lenksystem die bestmöglichste Ausnutzung den Lenkwinkels der homokinetischen Kupplung (42-44° je nach Fahrzeugtype) ermöglicht.

Die innere Halbachse 6 wird in die homokinetische Kupplung 25 nach erfolgter Einstellung sowohl des Rotationssystems des Aussenteils 28 als auch des Rotationssystems der Radtragnabe 21 eingeführt und mittels der Mutter 24 befestigt. Sie ist in einem Kugel-oder Rollenlager 9 gelagert, das im Innenteil 4 montiert ist und das permanent durch das in der Differentialbrücke vorhandene 01 geschmiert ist und durch Ölschutzscheiben 10 dicht gehalten ist.

Das erfindungsgemässe Lenksystem hat gegenüber den bekannten Systemen mit Halbkugel folgende Vorteile:

Grössere Einfachheit und daher kostensparende Bauweise,
Schnellere Montage und Demontage,
Geringere Anzahl von Komponenten,
Präzise Zentrierung der Trasmissionskomponenten (innere Halbachse 6 mit homokimetischer Kupplung 25),
Grösste Betriebssicherheit und - dauer dank der permanenten Schmierung der Rotationslager des drehbaren Innenteils 28,
Grössere Kompaktheit in der Länge (ca. 20 %),
Geringeres Gewicht (ca.20-30 %),
Grösstmögliche Ausnutzung des Lenkwinkels infolge des Fehlens der Halbkugel, da der Mindestdurchmesser dieser Halbkugel bei den bekannten Lenksystemen den Lenkwinkel beträchtlich einschränkt.

## Ansprüche

1) Lenksystem für Differentialbrücken für Kraftfahrzeuge aller Art mit 4-Rad-Antrieb, dadurch gekennzeichnet, dass es aus einem feststehendn, an der Differentialbrücke (5) angeflanschten Innenteil (4) und einem beweglichen Ausssenteil (28) besteht, wobei die beiden Teile einerseits über einen auf Kegelrollenlagern (17a,17b) gelagerten Drehzapfen (15) und andererseits über einen Gelenkkopf (2) miteinander verbunden sind.

2) Lenksystem nach Anspruch 1, dadurch gekennzeichnet, dass die innere Halbachse (6) mit der Radtragnabe (21) über eine homokinetische Kupplung (25) gekuppelt ist.

3) Lenksystem, nach den Ansprüchen 1 und 2, dadurch gekennzeichnet, dass das Aussenteil (28) bis zu 100° gegenüber dem Innenteil (4) gedreht werden kann, sodass die Einstellung des Rotationssystems des beweglichen Aussenteils (28) vor Einbau der Halbachse (6) und der homokinetischen Kupplung (25) erfolgen kann.

4) Lenksystem, nach den Ansprüchen 1-3, dadurch gekennzeichnet, dass für die Kegelrollenlager (17a,17b) eine permanente Ölschmierung vorgesehen ist.

5) Lenksystem, nach einem der Ansprüche 1-4, dadurch gekennzeichnet, dass die innere Halbachse (6) mittels eines Kugel-oder Rollenlagers (9) im feststehenden Innenteil (4) gelagert ist, das über die Differentialbrücke permanent ölgeschmiert ist.

0 285 063